# EUROPÄISCHE PATENTSCHRIFT

(11) **EP 0 905 387 B1**
(45) Veröffentlichungstag und Bekanntmachung des Hinweises auf die Patenterteilung: **19.09.2001**
(21) Anmeldenummer: 98104659.2
(22) Anmeldetag: 16.03.1998
(51) Int. Cl.: F16B 15/08, B25C 1/00

(54) **Coillierbares Nagelband mit Nagelband-Coil zur Verwendung in einem Nagelgerät**
Nailstrip and strip coil for use in a nailing machine
Ruban de clous et rouleau de ruban pour une machine à clouer

(30) Priorität: 24.09.1997 AT 59697 U; 15.01.1998 AT 1898 U
(43) Veröffentlichungstag der Anmeldung: 31.03.1999
(73) Patentinhaber: Leitner, Helmut, 3340 Waidhofen/Ybbs (AT)
(72) Erfinder: Leitner, Helmut, 3340 Waidhofen/Ybbs (AT)
(74) Vertreter: Pawloy, Peter Michael, Dipl.-Ing.

(56) Entgegenhaltungen:
- EP-A- 0 118 177
- EP-A- 0 672 482
- FR-A- 2 071 703
- US-A- 3 167 778
- US-A- 3 330 462

## Beschreibung

Die Erfindung betrifft ein Nagelband-Coil mit Stahlnägeln, die durch mindestens zwei Drähte miteinander verbunden sind, sowie einen Nagelband-Coil und ein Nagelgerät.

Für die Verwendung von Nagelgeräten, deren Betrieb durch Preßluft, Gas, elektrische Energie oder durch Hand erfolgt, werden magazinierte Nägel verwendet. Die US 3 330 462 A zeigt z.B. ein pneumatisch betriebenes Nagelgerät mit magazinierten Nägeln. Ein solches Nagelmagazin enthält dabei bis zu 140 parallel ausgerichtete Nägel, die durch einen Draht, der an den Nagelschäften z.B. angeschweißt ist, miteinander verbunden sind. Durch die Verformbarkeit des Drahtes laßt sich das so erhaltene Nagelband zu einem Coil aufwickeln, in welcher Form es in ein entsprechendes Nagelgerät eingesetzt wird. Bei den bisherigen Ausführungsformen bestanden die Verbindungsdrähte aus weichen unlegierten Metallen, die ein einwandfreies Coillieren und Verschweißen der Draht-Nagelverbindung gestatten. Eine Verarbeitung dieser Ausführungsform mit einem Nagelgerät ist schwierig oder überhaupt nicht möglich, da es durch die Schlagbewegung zu einer Stauchung der Nagelabstände kommt. Weiters legen sich die Nägel zum Magazinmittelpunkt um. Es kommt in der Praxis immer wieder zu Fehlfunktionen der Nagelgeräte, da, wie gesagt, die Nägel sich im Nagelgerät verkeilen, wenn es zu einer Verdrehung kommt, und weil sie vom Hammerelement des Nagelgerätes gestaucht und umgelegt werden. Insbesondere tritt diese Fehlfunktion auf, wenn ein Großteil des Nagelbandes bereits verbraucht ist und der Rest des Nagelband-Coils frei im Magazin liegt. Diese Nachteile sollen beseitigt werden.

Intensive Entwicklungsarbeit wurde der Verbindung zwischen Draht und Nagelschaft gewidmet, die von ihrer Festigkeit her ein unbeabsichtigtes Stauchen und Umlegen der Nägel vom Draht verhindern soll. Andererseits muß natürlich die Ablösung des Nagels vom Draht durch das Hammerelement im Nagelgerät sowie eine einwandfreie Verschweißung Draht-Nägel gewährleistet sein.

Aufgabe der vorliegenden Erfindung ist es ferner, ein coillierbares Nagelband zu schaffen, das diesem Verdrehen oder Verkanten der Nägel entgegenwirkt und eine sichere Abtrennung der Nägel von den Drähten im Nagelgerät durch das Hammerelement gewährleistet, und somit ein störungsfreies schnelles Arbeiten ermöglicht. Weiters ist es Aufgabe der Erfindung, den Nagelband-Coil und das Nagelgerät so auszubilden, daß das Verkanten des Nagelbandes verhindert wird.

Um ein Verkanten der Nägel im Nagelgerät und damit ein Blockieren des Nagelgerätes im Betrieb zu verhindern, wird erfindungsgemäß vorgeschlagen, daß die Drähte aus einem vergüteten Stahldraht bestehen. Dies bringt den Vorteil, daß die Drähte gehärtet werden und somit ihre Verformung stark beeinflußt wird und somit eine höhere Sicherheit der Anordnung der Nägel des Nagelbandes beim Einschlagen gewährleistet ist.

Bei entsprechender Festigkeit des Drahtes wird die Aufgabe dadurch gelöst, daß für Nägel mit einer Länge von 14 bis 25 mm und einem Schaftdurchmesser von 2 bis 3 mm, vorzugsweise 2,5 mm, die Drähte einen Abstand von 6,5 bis 7,5 mm, vorzugsweise 7 mm, voneinander haben. Bei der angegebenen Länge der Nägel läßt dieser erfindungsgemäße Abstand nur mehr ein minimales Abweichen der Nägel, welches das Nagelgerät nicht mehr blockieren kann, von der gewünschten Position der Nägel zu. Andererseits ist der Abstand gering genug, daß das Hammerelement des Nagelgerätes auf beide Verbindungsstellen der Drähte mit einem Nagel einwirken kann und somit ein sicheres Abtrennen des Nagels von den Drähten gewährleistet ist.

Vorzugsweise weisen die Nägel Köpfe auf und der kopfnahe Draht ist in einem Abstand von 9 bis 11 mm, vorzugsweise 10 mm, vom Kopf an den Schäften der Nägel befestigt. Dieser Abstand des kopfnahen Drahtes zum Kopf sichert das einwandfreie Trennen des Nagels von den Drähten. Insbesondere weist der kopfnahe Draht einen Abstand vom Kopf des Nagels auf, der dem Durchmesser des Kopfes entspricht.

Nach einem besonderen Ausführungsbeispiel enthält das Nagelband 70 bis 85, vorzugsweise 80, Nägel, was einerseits ein häufiges Nachladen des Nagelgerätes verhindert und andererseits Größe und Gewicht des Nagelmagazines begrenzt. Eine Begrenzung des Coils ist durch das Gewicht des Nagelbandes und die Magazingröße gegeben.

Wie an sich bekannt, sind die Nägel gegenüber der Senkrechten auf die Drähte vorzugsweise um etwa 15° geneigt. Vorzugsweise sind die Drähte vergütet und weisen durch Strecken (Kaltverformung) eine Zugfestigkeit von 393-588 N/mm² auf.

Wie zuvor beschrieben, werden zur Vermeidung der Fehlfunktion vergütete Verbindungsdrähte vorgesehen, die die Nägel in ihrer Stellung elastisch halten. Diese Wirkung ist jedoch nicht in allen Fällen ausreichend. Überdies kann die Notwendigkeit bestehen, auch Nagelband-Coils ohne vergütete Drähte einzusetzen.

Gemäß vorliegender Erfindung wird somit weiters vorgesehen, daß in der Achse des Coils eine Wickelhülse vorgesehen ist, deren Außendurchmesser dem Innendurchmesser des Coils entspricht und deren Zylinderfläche an den Nagelschäften, unter Freistellung der Nägelköpfe, bzw. an den Drähten der innersten Coillage anliegt..

Nach einem Ausführungsbeispiel ist die Wickelhülse ein Zylinder und in einem Abstand vom Magazinboden angeordnet, sodaß die Nägelköpfe der inneren Coillage freigestellt sind und nach innen unter die Wickelhülse ragen. Nach einer weiteren Ausführung weist die Wickelhülse eine die Nägelköpfe aufnehmende Ringnut auf. Weitere Merkmale sind den Ansprüchen, der Beschreibung und den Zeichnungen zu entnehmen.

Die vorliegende Erfindung betrifft auch den Nagelband-Coil zur Verwendung in einem solchen Nagelgerät, wobei der Coil auf einer Wickelhülse aufgewickelt ist, deren Außendurchmesser dem Innendurchmesser des Coils entspricht und die entweder eine ringförmige Nut zur Aufnahme der Nägelköpfe aufweist oder zylinderförmig ausgebildet und unter Freistellung der Nägelköpfe angeordnet ist.

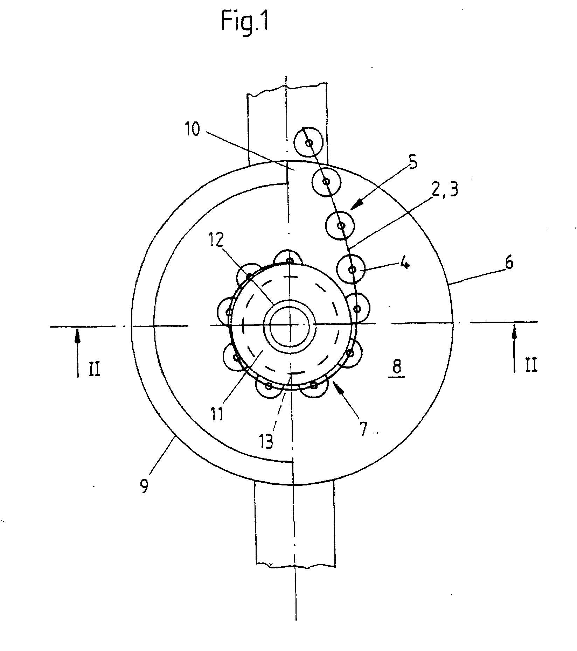

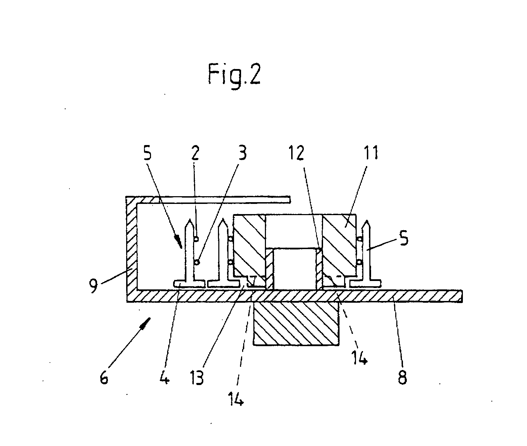

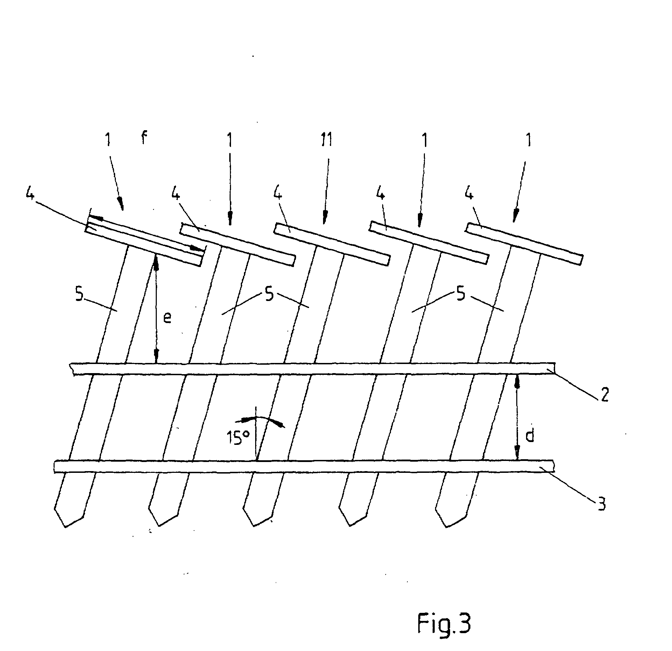

Nachstehend wird die Erfindung anhand der Zeichnungen beispielhaft beschrieben. Fig. 1 ist eine Aufsicht auf einen Teil eines Nagelgerätes, Fig. 2 ein Schnitt nach der Linie II-II in Fig. 1 und Fig. 3 eine abgebrochene Aufsicht auf das Nagelband.

Die Fig.1 zeigt die Aufsicht auf das Magazin eines Nagelgerätes, wie es in der EP 0 321 440 geoffenbart ist. Die hier nicht relevanten übrigen Teile des Nagelgerätes sowie der Verschlußdeckel für das Magazin sind der einfacheren Darstellung wegen fortgelassen.

Im Magazin 6 liegt der Nagelband-Coil 7. Er besteht aus einer Reihe von Nägel 5, die durch zwei übereinanderliegende Verbindungsdrähte 2,3 zu einem Band verbunden sind. Dargestellt ist der Endbereich des Coils, wobei also ein Großteil der Nägel bereits verbraucht ist. Der Magazinboden ist mit 8 bezeichnet, und über die eine Hälfte des Magazins erstreckt sich die Magazinwand 9. Durch einen analog ausgebildeten Magazindeckel kann das Magazin geschlossen werden, wobei das Nagelband durch eine Öffnung 10 zum, hier nicht dargestellten, Hammerkopf austritt.

Gemäß vorliegender Erfindung ist eine Wickelhülse 11 vorgesehen, die mit dem Coil 7 auf den Achsdorn 12 des Magazins drehbar aufgesteckt ist. Die Wickelhülse weist in einer Ausführung an einer Seite, nämlich an der zum Magazinboden 8 weisenden Seite, eine ringförmige Nut 13 auf, die eine Aufnahme der Nägelköpfe 4 erlaubt. Strichliert mit der Linie 14 ist der Verlauf der Unterseite der Wickelhülse eingezeichnet, wenn nach einer weiteren Ausführung anstelle der Nut die Wickelhülse einfach als Zylinder vorgesehen ist, der so in den Coil eingesteckt ist, daß die Nägelköpfe 4 unterhalb der Wickelhülse liegen, sodaß die Nägelköpfe freigestellt sind.

Beim Abwickeln des Nagelbandes im Verlaufe der Tätigkeit des Nagelgerätes ist durch beide Varianten sichergestellt, daß insbesondere die innerste Lage des Coils durch die zylindrische Fläche der Wickelhülse senkrecht gehalten wird. Dies trifft auch dann zu, wenn der Coil weitgehend abgewickelt ist, wie dies in Fig.1 dargestellt ist.

In Fig.2 ist ein Schnitt nach der Linie II-II in Fig.1 dargestellt, wobei auf der linken Seite eine zweite Lage des Coils eingezeichnet ist. Die alternativ vorgesehene ringförmige Nut 13 ist so tief ausgebildet, daß die Nägelköpfe 4 genügend Platz haben.

Der Nagelband-Coil kann entweder schon von Anbeginn an auf die Wickelhülse aufgewickelt sein, sodaß der Coil mit der Wickelhülse aufgesteckt wird. Die Wickelhülse kann aber auch getrennt als Zubehörteil zum Nagelgerät vorgesehen werden, wobei die Wickelhülse in den vorbereiteten Nagelband-Coil mittig eingesteckt wird.

Die Höhe der Wickelhülse entspricht etwa der Höhe des Nagelbandes. Jedenfalls muß gewährleistet sein, daß die Nägel der inneren Coil-Lage bzw. deren beide Verbindungsdrähte 2,3 auf der Zylinderfläche der Wickelhülse aufliegen.

Gemäß Fig. 3 ist das Nagelband so ausgebildet, daß mehrere Nägel 1 mit Köpfen 4 und Schäften 5 parallel zueinander ausgerichtet und mittels zweier Drähte 2, 3 miteinander verbunden sind. Die Drähte 2, 3 weisen einen Abstand d voneinander auf. Der kopfnahe Draht 2 hat von den Köpfen 4 der Nägel 1 einen Abstand e, der dem Durchmesser f ihrer Köpfe 4 gleicht. Die Schäfte 5 der Nägel 1 sind gegenüber der Senkrechten auf die Drähte 2, 3 um 15° geneigt. Die weiter oben beschriebenen Abmessungen und Maßverhältnisse haben sich in überraschender Weise als vorteilhaft erwiesen.

Wenn gemäß einer Variante die Drähte vergütet sind, wird ihre Härte verändert und die Durchbiegung und Stauchung sind begrenzt. Dies bedeutet aber wiederum, daß die Bewegungsmöglichkeiten der einzubringenden Nägel besser kontrollierbar und vorhersehbar sind und ein einwandfreier Vorschub des Nagelbandes gewährleistet ist. Das Vergüten kann z.B. durch Strecken der Drähte mit etwa 40 bis 60 kp Zugkraft erfolgen.

## Patentansprüche

1. Nagelband-Coil mit Nägeln, die durch mindestens zwei Drähte verbunden sind, **dadurch gekennzeichnet, daß** für Nägel (1) mit einer Länge von 14 bis 25 mm und einem Schaftdurchmesser von 2 bis 3 mm, vorzugsweise 2,5 mm, die Drähte (2,3) einen Abstand (d) von 6,5 bis 7,5 mm, vorzugsweise 7 mm, voneinander haben.

2. Nagelband-Coil nach Anspruch 1, **dadurch gekennzeichnet, daß** die Nägel (1) Köpfe (4) aufweisen und daß der kopfnahe Draht (2) in einem Abstand (e) von 9 bis 11 mm, vorzugsweise 10 mm, von den Köpfen (4) an den Schäften (5) der Nägel (1) befestigt ist.

3. Nagelband-Coil nach einem der Ansprüche 1 oder 2, **dadurch gekennzeichnet, daß** die Nägel (1) Köpfe (4) aufweisen und daß der kopfnahe Draht (2) in einem Abstand (e) von den Köpfen (4) an den Schäften (5) der Nägel (1) befestigt ist, der dem Durchmesser (f) der Köpfe (4) entspricht.

4. Nagelband-Coil nach einem der Ansprüche 1 bis 3, **dadurch gekennzeichnet, daß** das Nagelband 70 bis 85, vorzugsweise 80, Nägel (1) enthält.

5. Nagelband-Coil nach einem der vorhergehenden Ansprüche 1 bis 4, **dadurch gekennzeichnet, daß** die Nägel (1) gegenüber der Senkrechten auf die Drähte (2,3) um etwa 15° geneigt sind.

6. Nagelband-Coil nach einem der Ansprüche 1 bis 5, **dadurch gekennzeichnet, daß** die Drähte (2,3) vergütet sind und bevorzugt durch Strecken (Kaltverformung) eine Zugfestigkeit von 393-588 N/mm² aufweisen.

7. Nagelgerät mit einem Magazin und einem darin aufgenommenen Nagelband-Coil gemäß einem der Ansprüche 1 bis 6, **dadurch gekennzeichnet, daß** in der Achse des Coils (7) eine Wickelhülse (11) vorgesehen ist, deren Außendurchmesser dem Innendurchmesser des Coils entspricht und deren Zylinderfläche an den Nagelschäften (5), unter Freistellung der Nägelköpfe (4), bzw. an den Drähten (2,3) der innersten Coillage anliegt.

8. Nagelgerät nach Anspruch 7, **dadurch gekennzeichnet, daß** die Wickelhülse (11) ein Zylinder ist und in einem Abstand vom Magazinboden (8) angeordnet ist, sodaß die Nägelköpfe (4) freigestellt sind.

9. Nagelgerät nach einem der Ansprüche 7 oder 8, **dadurch gekennzeichnet, daß** die Wickelhülse (11) eine ringförmige Nut (13) zur Aufnahme der Nägelköpfe (4) aufweist.

10. Nagelgerät nach einem der Ansprüche 7 bis 9, **dadurch gekennzeichnet, daß** die Wickelhülse (11) drehbar auf einem mit dem Magazinboden (8) verbundenen Achsdorn (12) gelagert ist.

11. Nagelgerät nach einem der Ansprüche 7 bis 10, **dadurch gekennzeichnet, daß** die Wickelhülse (11) eine Höhe aufweist, die etwa der Breite des Nagelbandes entspricht.

12. Nagelband-Coil nach einem der Ansprüche 1 bis 6 zur Verwendung in einem Nagelgerät, **dadurch gekennzeichnet, daß** der Coil auf einer Wickelhülse (11) aufgewickelt ist, deren Außendurchmesser dem Innendurchmesser des Coils (7) entspricht und die entweder eine ringförmige Nut (13) zur Aufnahme der Nägelköpfe (4) aufweist oder zylinderförmig ausgebildet und unter Freistellung der Nägelköpfe (4) angeordnet ist.

## Claims

1. A nailstrip coil comprising nails interconnected by at least two wires, **characterised in that** for nails (1) having a length of from 14 to 25 mm and a shaft diameter of from 2 to 3 mm, preferably 2.5 mm, the wires (2, 3) have a distance (d) of from 6.5 to 7.5 mm, preferably 7 mm, from each other.

2. A nailstrip coil according to claim 1, **characterised in that** the nails (1) have heads (4) and that the wire (2) near the heads is attached to the shafts (5) of the nails (1) at a distance (e) of from 9 to 11 mm, preferably 10 mm, from the heads (4).

3. A nailstrip coil according to any one of claims 1 or 2, **characterised in that** the nails (1) have heads (4) and that the wire (2) near the heads is attached to the shafts (5) of the nails (1) at a distance (e) from the heads (4), which distance corresponds to the diameter (f) of the heads (4).

4. A nailstrip coil according to any one of claims 1 to 3, **characterised in that** the nailstrip comprises from 70 to 85 nails, preferably 80 nails (1).

5. A nailstrip coil according to any one of the preceding claims 1 to 4, **characterised in that** the nails (1) are inclined relative to a vertical line to the wires (2, 3) by approximately 15°.

6. A nailstrip coil according to any one of claims 1 to 5, **characterised in that** the wires (2, 3) are quenched and subsequently tempered and preferably have a tensile strength of 393-588 N/mm² on account of drawing (cold forming).

7. A nailing device comprising a magazine and a nailstrip coil according to any one of claims 1 to 6 accommodated therein, **characterised in that** a coiling sleeve (11) is provided in the axle of the coil (7), the outer diameter of the coiling sleeve corresponding to the inner diameter of the coil and having a cylinder surface abutting the nail shafts (5), with the nail heads (4) staying clear, and on the wires (2, 3), respectively, of the innermost coil layer.

8. A nailing device according to claim 7, **characterised in that** the coiling sleeve (11) is a cylinder and is arranged at a distance from the magazine bottom (8) so that the nail heads (4) remain clear.

9. A nailing device according to any one of claims 7 or 8, **characterised in that** the coiling sleeve (11) comprises an annular groove (13) to receive the nail heads (4).

10. A nailing device according to any one of claims 7 to 9, **characterised in that** the coiling sleeve (11) is rotatably mounted on an axle pin (12) connected with the magazine bottom (8) .

11. A nailing device according to any one of claims 7 to 10, **characterised in that** the coiling sleeve (11) has a height approximately corresponding to the width of the nailstrip.

12. A nailstrip coil according to any one of claims 1 to 6 to be used in a nailing device, **characterised in that** the coil is coiled on a coiling sleeve (11) having an outer diameter corresponding to the inner diameter of the coil (7) and which either has an annular groove (13) to receive the nail heads (4) or is cylindrically shaped and arranged so that the nail heads (4) remain clear.

## Revendications

1. Rouleau de ruban à clous, comprenant des clous qui sont reliés par au moins deux fils, **caractérisé en ce que** pour des clous (1) avec une longueur de 14 à 25 mm et un diamètre de tiges de 2 à 3 mm, de préférence 2,5 mm, les fils (2, 3) sont à une distance (d) de 6,5 à 7,5 mm, de préférence 7 mm, l'un de l'autre.

2. Rouleau de ruban à clous selon la revendication 1, **caractérisé en ce que** les clous (1) comprennent des têtes (4), et en ce que le fil (2) proche des têtes est fixé sur les tiges (5) des clous (1) à une distance (e) de 9 à 11 mm, de préférence 10 mm, depuis les têtes (4).

3. Rouleau de ruban à clous selon l'une ou l'autre des revendications 1 et 2, **caractérisé en ce que** les clous (1) comprennent des têtes (4), et en ce que le fil (2) proche des têtes est fixé sur les tiges (5) des clous (1) à une distance (e) depuis les têtes (4) qui correspond au diamètre (f) des têtes (4).

4. Rouleau de ruban à clous selon l'une des revendications 1 à 3, **caractérisé en ce que** le ruban à clous contient de 70 à 85, et de préférence 80 clous (1).

5. Rouleau de ruban à clous selon l'une des revendications 1 à 4, **caractérisé en ce que** les clous (1) sont inclinés d'environ 15° par rapport à la perpendiculaire aux fils (2, 3).

6. Rouleau de ruban à clous selon l'une des revendications 1 à 5, **caractérisé en ce que** les fils (2, 3) sont traités par trempe et revenu, et présentent une résistance à la traction de 393 à 588 N/mm², de préférence par étirage (déformation à froid).

7. Machine de cloutage comprenant un magasin et à l'intérieur de celui-ci un rouleau de ruban à clous selon l'une des revendications 1 à 6, **caractérisée en ce qu'**il est prévu une douille d'enroulement (11) dans l'axe du rouleau (7), dont le diamètre extérieur correspond au diamètre intérieur du rouleau, et dont la surface cylindrique s'applique contre les tiges des clous (5), en dégageant les têtes (4) des clous, ou respectivement contre les fils (2, 3) de la couche la plus intérieure du rouleau.

8. Machine de cloutage selon la revendication 7, **caractérisée en ce que** la douille d'enroulement (11) est un cylindre et agencée à distance du fond (8) du magasin, de sorte que les têtes (4) des clous sont dégagées.

9. Machine de cloutage selon l'une ou l'autre des revendications 7 et 8, **caractérisée en ce que** la douille d'enroulement (11) comporte une gorge annulaire (13) pour la réception des têtes (4) des clous.

10. Machine de cloutage selon l'une des revendications 7 à 9, **caractérisée en ce que** la douille d'enroulement (11) est montée en rotation sur une broche d'axe (12) reliée au fond (8) du magasin.

11. Machine de cloutage selon l'une des revendications 7 à 10, **caractérisée en ce que** la douille d'enroulement (11) a une hauteur qui correspond approximativement à la largeur du ruban à clous.

12. Rouleau de ruban à clous selon l'une des revendications 1 à 6 destiné à l'utilisation dans une machine de cloutage, **caractérisé en ce que** le rouleau est enroulé sur une douille d'enroulement (11), dont le diamètre extérieur correspond au diamètre intérieur du rouleau (7) et qui soit comporte une gorge annulaire (13) pour la réception des têtes (4) des clous, soit est réalisée sous forme cylindrique, et qui est agencée en dégageant les têtes (4) des clous.
